# EUROPÄISCHE PATENTANMELDUNG

(11) **EP 2 966 833 A1**
(43) Veröffentlichungstag der Anmeldung: **13.01.2016**
(21) Anmeldenummer: 14176568.5
(22) Anmeldetag: 10.07.2014
(51) Int. Cl.: H04L 29/08, G01R 21/00, G06F 17/30

(54) **Verfahren zur Bereitsstellung von Messdaten und Messdatenerfassungsanordnung**

(71) Anmelder: Haupt, Rolf Wilhelm, Chaiwan, Hong Kong (HK)
(72) Erfinder: Haupt, Rolf Wilhelm, Chaiwan, Hong Kong (HK)
(74) Vertreter: Gerstein, Hans Joachim

(57) **Zusammenfassung**

Die Erfindung betrifft ein Verfahren zur Bereitstellung von Messdaten (MD) in einem Datennetzwerk (2) mit einer Anzahl verteilt angeordneter Sensoren (4) einer Mehrzahl unterschiedlicher, voneinander unabhängiger Nutzer, einem Server (6) und mindestens einer Abfrageeinheit (3), wobei die Sensoren (4), der Server (6) und die mindestens eine Abfrageeinheit (3) an das Datennetzwerk (2) angeschlossen sind.

Das Übertragen der Messdaten (MD) der Sensoren (4) erfolgt jeweils in Verbindung mit einem eindeutigen Identifikationsdatum (ID) des Sensors (4) an den Server (6). Ein Abspeichern der übertragenen Messdaten (MD) erfolgt in Verbindung mit dem zugehörigen Identifikationsdatum (ID) unabhängig von dem zugeordneten Nutzer auf dem Server (6). Das Anfordern von Messdaten (MD) über eine Abfrageeinheit (3) erfolgt durch Übertragen einer das Identifikationsdatum (ID) des abzufragenden Sensors (4) aufweisenden Abfragenachricht von der Abfrageeinheit (3) über das Datennetzwerk (2) an den Server (6). Das Übertragen der zu dem Identifikationsdatum (ID) auf dem Server (6) abgespeicherten Messdaten (MD) von dem Server (6) an die Abfrageeinheit (3) erfolgt in Reaktion auf den Empfang der Abfragenachricht der Abfrageeinheit (3) durch den Server (6).

## Beschreibung

Die Erfindung betrifft ein Verfahren zur Bereitstellung von Messdaten in einem Datennetzwerk mit einer Anzahl verteilt angeordneter Sensoren einer Mehrzahl unterschiedlicher, voneinander unabhängiger Nutzer, einem Server und mindestens einer Abfrageeinheit, wobei die Sensoren, der Server und die mindestens eine Abfrageeinheit an das Datennetzwerk angeschlossen sind.

Die Erfindung betrifft weiterhin eine Messdatenerfassungsanordnung mit einem Datennetzwerk, einer Anzahl verteilt angeordneter Sensoren einer Mehrzahl unterschiedlicher, voneinander unabhängiger Nutzer, einem Server, und mindestens einer Abfrageeinheit, wobei die Sensoren, der Server und die mindestens eine Abfrageeinheit an das Datennetzwerk anschließbar sind.

Für die Fernüberwachung und Gebäudeautomation besteht ein Bedarf, auf dezentral durch Sensoren erfasste Messdaten entfernt über ein Datennetzwerk, insbesondere das Internet, von einer Abfrageeinheit aus zugreifen zu können. Um die Kommunikation der verteilt angeordneten Sensoren in einem weltweiten Datennetzwerk zu ermöglichen und einen Fernzugriff zu erhalten, müssen die Sensoren und gegebenenfalls zugeordnete Basisstationseinheiten sehr aufwendig konfiguriert werden. Hierzu sind nutzerabhängig Kommunikationsadressen und Zugangscodes einzugeben. Der Fernzugriff kann dann über geschützte Zugänge dadurch ermöglicht werden, dass die Abfrageeinheit auf die in einer Basisstationseinheit abgelegten Messwerte der zur Basisstationseinheit gehörigen Sensoren zugreift.

In CN 101551662 A ist ein Sensorüberwachungsverfahren für ein Sensornetzwerk basierend auf das Internet beschreiben, bei dem über einen Browser ohne Spezialsoftware von entfernten Rechnern die Sensoridentifikation in einem Server abgerufen werden kann, um eine Beziehung zu dem zu überwachenden Sensor herzustellen. Der Server arbeitet dabei als Webserver, sodass die entfernte Auswerteeinheit ohne spezielle Software über die auf dem Server abgelegte Auswertesoftware mithilfe eines Browsers zugegriffen werden kann. Die Sensoren müssen dennoch aufwendig mit dem Server gekoppelt werden und es ist eine Einrichtung des Server-Sensornetzwerkes erforderlich.

US 2014/0074979 A1 beschreibt ein drahtloses Sensornetzwerk mit einer Anzahl von intelligenten Sensoren, die über das Internet mit einem Koordinator gekoppelt sind. Für eine Anzahl von Sensoren ist eine Basisstation mit einem integrierten Webserver vorgesehen, sodass sich der Nutzer über einen gewöhnlichen Browser mit dieser Basisstation verbinden kann. Die mit dem Webserver ausgerüsteten Basisstationen müssen durch spezielle Einrichtung und gegebenenfalls Freigabe einer Firewall für den Fernzugriff über das Internet eingerichtet werden. Zudem müssen die Sensoren individuell über den drahtlosen Kommunikationspfad an die Basisstation angekoppelt werden.

Ausgehend hiervon ist es Aufgabe der vorliegenden Erfindung eine einfach zu etablierende Messdatenerfassungsanordnung und ein Verfahren zur Bereitstellung von Messdaten mit einer solchen Messdatenerfassungsanordnung zu schaffen, bei dem ohne aufwendige Einrichtung von Kommunikationsparametern ein Fernzugriff auf Messdaten ausgewählter Sensoren möglich ist und bei dem die Messdatenerfassungsanordnung von einer Vielzahl voneinander unabhängigen Nutzern im ausreichenden Grad geschützt voneinander ohne aufwendige Nutzerauthentifizierung genutzt werden kann.

Die Aufgabe wird durch das Verfahren mit den Merkmalen des Anspruchs 1 und die Messdatenerfassungsanordnung mit den Merkmalen des Anspruchs 6 gelöst. Vorteilhafte Ausführungsformen sind in den Unteransprüchen beschrieben.

Bei dem Verfahren und der Messdatenerfassungsanordnung erfolgt erfindungsgemäß ein:
- Übertragen der Messdaten der Sensoren jeweils in Verbindung mit einem eindeutigen Identifikationsdatum des Sensors an den Server;
- Abspeichern der übertragenen Messdaten in Verbindung mit dem zugehörigen Identifikationsdatum unabhängig von dem zugeordneten Nutzer auf dem Server;
- Anfordern von Messdaten über eine Abfrageeinheit durch Übertragen einer das Identifikationsdatum des abzufragenden Sensors aufweisenden Abfragenachricht von der Abfrageeinheit über das Datennetzwerk an den Server; und
- Übertragen der zu dem Identifikationsdatum auf dem Server abgespeicherten Messdaten von dem Server an die Abfrageeinheit in Reaktion auf den Empfang der Abfragenachricht der Abfrageeinheit durch den Server.

Hierzu sind bei der Messdatenerfassungsanordnung der eingangs genannten Art
- die Sensoren zur Erfassung von Messdaten und Übertragung an den Server in Verbindung mit einem jeweiligen eindeutigen Identifikationsdatum des Sensors eingerichtet;
- der Server zum Empfang und zur Abspeicherung der Messdaten in Verbindung mit dem Identifikationsdatum des zugehörigen Sensors unabhängig von einem Nutzer des Sensors eingerichtet; und
- die mindestens eine Abfrageeinheit zum Anfordern von Messdaten durch Übertragen einer das Identifikationsdatum des abzufragenden Sensors aufweisenden Abfragenachricht an den Sensor über das Datennetzwerk und zum Empfang der im Server in Verbindung mit dem Identifikationsdatum abgespeicherten Messdaten des abgefragten Sensors eingerichtet.

Der Server ist dabei zum Übertragen der zu dem Identifikationsdatum auf dem Server abgespeicherten Messdaten von dem Server an die Abfrageeinheit in Reaktion auf den Empfang der Abfrageeinheit durch den Server eingerichtet.

Unter einem Server wird eine Datenverarbeitungseinheit verstanden, die einen Datenspeicher hat oder mit einem separaten Datenspeicher verbunden ist, auf dem in der Art einer Datenbank die empfangenen Messdaten der Sensoren zusammen mit dem zugehörigen Identifikationsdatum der Sensoren abgelegt werden. Über den Server kann dann auf diese abgespeicherten Messdaten zugegriffen werden, indem sämtliche Messdaten oder eine ausgewählte Anzahl von Messdaten z.B. für einen ausgewählten Zeitraum, die einem abgefragten Identifikationsdatum eines Sensors zugeordnet sind, aus der Datenbank ausgelesen und an die Abfrageeinheit zur dortigen Anzeige und/oder Auswertung weitergeleitet werden.

Erfindungsgemäß wird vorgeschlagen, dass die Einzelsensoren ihre Messdaten grundsätzlich an den Server übermitteln, um dort die Messdaten zusammen mit den zugehörigen Identifikationsdaten für die einzelnen Sensoren zu sammeln. Der Fernzugriff auf die Messdaten erfolgt somit nicht auf einen dezentralen nutzerbezogenen Datenspeicher, wie dies bei einem in einem Gebäude bereitgestellten Webserver der Fall ist. Vielmehr greifen sämtliche voneinander unabhängige Nutzer auf denselben Server zu, auf dem ohne Unterscheidung des Besitzers der Sensoren (d.h. des jeweiligen Nutzers) die Messdaten sämtlicher Sensoren der voneinander unabhängigen Nutzer gesammelt werden.

Damit wird in dem Server nicht zwischen unterschiedlichen Nutzern unterschieden und es ist keine Nutzerauthentifizierung notwendig.

Vielmehr ist der Kommunikationsaufbau der Sensoren zur Übertragung der Messdaten an den Server standardisiert und benötigt keine nutzerspezifische Parametrierung. Der Kommunikationsaufbau ist damit in den Sensoren und gegebenenfalls in zwischengeschalteten Basisstationen werksseitig vorgegeben. Damit ist es nur noch erforderlich, die Sensoren direkt oder über eine bereits an die Sensoren angepasste Basisstationseinheit an das Internet anzuschließen. Die herkömmliche aufwendige Einrichtung der Sensoren und der Basisstation entfällt dabei. Der Zugriff auf die Messdaten wird über den Server ermöglicht. Auch hier erfolgt keine Trennung zwischen den unterschiedlichen Nutzern, sodass die bisher übliche aufwendige Nutzerauthentifizierung und zugehörige Einrichtung des Kommunikationsaufbaus entfällt. Vielmehr kann auf die Messdaten eines Sensors zugegriffen werden, indem eine Abfragenachricht mit dem Identifikationsdatum des abzufragenden Sensors von der Abfrageeinheit an den Server übermittelt wird. Die Authentifizierung erfolgt somit über das Identifikationsdatum der einzelnen Sensoren.

Hierzu haben die Sensoren vorzugsweise von außen zugängliche Identifizierungscodes, z.B. in Form QR-Codes. Die mindestens eine Abfrageeinheit ist dann zur Erfassung des Identifizierungscodes, zur Ermittlung eines Identifikationsdatums des zugehörigen Sensors aus dem Identifizierungscode und zur Generierung einer das Identifikationsdatum enthaltenen Abfragenachricht eingerichtet. Die Erfassungseinheit der Abfrageeinheit kann dabei z.B. einen optischen Sensor mit zugehöriger Logik zur Erfassung von Barcodes oder QR-Codes haben. Denkbar ist aber auch, dass die Abfrageeinheit zur Funkabfrage von Transpondern eingerichtet ist, wobei die Sensoren jeweils einen aktiven oder passiven Transponder haben, der auf drahtlose Abfrage durch die Abfrageeinheit den Identifizierungscode oder direkt das zugehörige Identifikationsdatum des Sensors an die Abfrageeinheit übermittelt. Insofern wird unter einem "Identifizierungscode" auch das Identifikationsdatum selbst verstanden. Der Identifizierungscode kann darüber hinaus jedoch auch weitere Informationen haben.

Zur Abfrage eines Sensors muss somit der Identifizierungscode bekannt sein, welcher vorzugsweise werksseitig für die Sensoren vorgegeben ist und nicht nutzerabhängig parametriert wird.

Besonders vorteilhaft ist es, wenn die Messdatenerfassungsanordnung mindestens eine Basisstationseinheit hat, die an das Datennetzwerk anschließbar und zum Empfang von Messdaten angeschlossener Sensoren zusammen mit den zugehörigen Identifikationsdaten und zur Weiterleitung an den Server eingerichtet ist. Der Kommunikationsaufbau mit dem Server über das Datennetzwerk und der Kommunikationsaufbau der Sensoren mit der Basisstationseinheit ist dabei nutzerunabhängig in der Basisstationseinheit sowie den Sensoren werksseitig festgelegt. Damit kann der Kommunikationsaufbau ohne weitere Parametrierung beim drahtgebundenen oder vorzugsweise drahtlosen Ankoppeln der Sensoren an die Basisstationseinheit unmittelbar aufgrund der werksseitigen Vorgabe des Kommunikationsaufbaus erfolgen. Durch die Anbindung der Basisstationseinheit an das Datennetzwerk, insbesondere an das weltweite Internet, kann die Basisstationseinheit die an diese übermittelten Messdaten auch ohne weitere Parametrierung an den Server weiterleiten. Hierzu hat der Server vorzugsweise eine werksseitig vorgegebene, feste IP-Adresse, sodass die Basisstationseinheiten ohne weitere Einrichtung die Messdaten durch eine werksseitig standardisierte Nachricht an die IP-Adresse senden können.

Im Ergebnis müssen die Sensoren und die zugehörigen Basisstationseinheiten somit nur noch an dem gewünschten Ort platziert und die Basisstationseinheit mit dem Internet z.B. über eine drahtgebundene LAN-Leitung angebunden werden. Eine nutzerabhängige Einrichtung und Authentifizierung ist zum weiteren Betrieb dann nicht mehr erforderlich.

Die Sensoren und die mindestens eine Basisstationseinheit haben in einer bevorzugten Ausführungsform jeweils eine drahtlose Datenübertragungseinheit zur Übertragung der Messdaten und der zugehörigen Identifikationsdaten von den Sensoren an die Basisstationseinheit. Hierbei nutzen die Sensoren und die Basisstationseinheiten wiederum einen werksseitig vorgegebenen Funkkommunikationsstandard, der keiner weiteren Einrichtung bedarf. Denkbar ist dabei, dass die Funkkommunikation über proprietäre Funkprotokolle oder über Standardprotokolle, wie ZigBee, Bluetooth, WLAN oder ähnliches erfolgt. Dabei ist allerdings entscheidend, dass die Funkprotokolle werksseitig eingerichtet sind und vom Nutzer keiner weiteren Parametrierung erfordern, um den Kommunikationsaufbau zu gewährleistet.

Die Kommunikationsadresse des Servers ist somit vorzugsweise im Datennetzwerk festgelegt, d.h. statisch. Diese Kommunikationsadresse des Servers ist dann für die direkte Anbindung der Sensoren in den Sensoren selbst oder bei Verwendung einer Basisstationseinheit in der Basisstationseinheit fest eingestellt und damit vorgegeben.

Die Erfindung wird nachfolgend anhand eines Ausführungsbeispiels mit den beigefügten Zeichnungen näher erläutert. Es zeigen:
- Figur 1 -: Blockdiagramm einer Messdatenerfassungsanordnung;
- Figur 2 -: Skizze des Aufbaus einer Datenbank des Servers mit Messdaten und zugehörigem Identifikationsdatum der Sensoren.

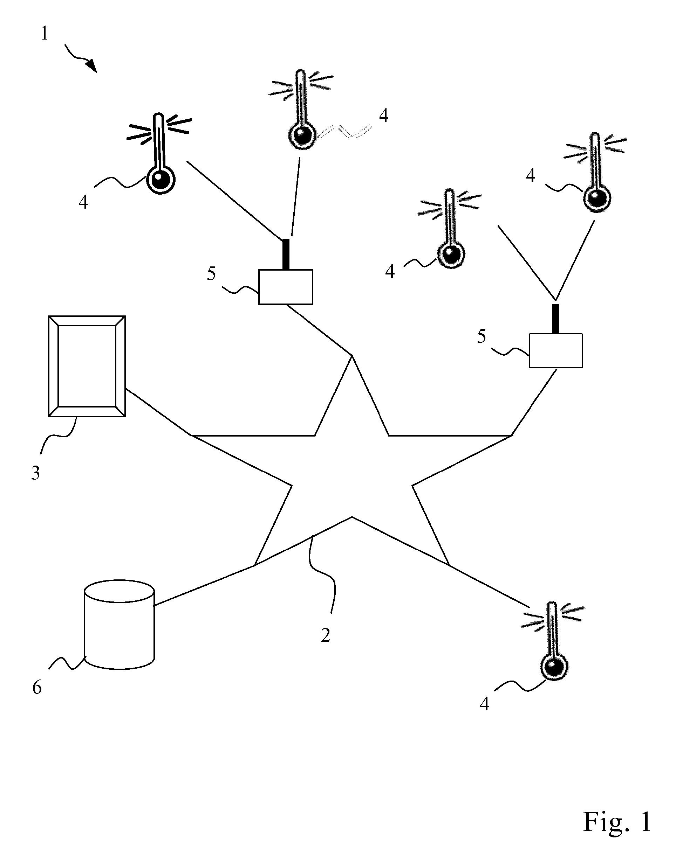

Figur 1 lässt ein Blockdiagramm einer Messdatenerfassungsanordnung 1 erkennen, dass ein Datennetzwerk 2 umfasst. Das Datennetzwerk 2 hat einen Abschnitt, der für eine Vielzahl voneinander unabhängiger Nutzer zugänglich ist, wie insbesondere das Internet.

Die Messdatenerfassungsanordnung 1 hat eine Anzahl verteilt angeordneter Abfrageeinheiten 3, wie bspw. Computer, Smartphones, Tablets oder ähnlicher Datenverarbeitungsgeräte, die an das Datenverarbeitungsnetzwerk 2 anschließbar sind. Mithilfe dieser mindestens einen Abfrageeinheit 3 lassen sich Messdaten abrufen und anzeigen, die von einer Anzahl verteilt angeordneter Sensoren 4 aufgenommen werden. Diese Sensoren 4 sind von voneinander unabhängigen Nutzern an den jeweils ausgewählten Orten, wie in unterschiedlichen Gebäuden angeordnet, um dort Messdaten, wie Temperaturen, Wetterdaten (Luftdruck, Windrichtung, Windgeschwindigkeit, Außentemperatur, Niederschlagsmenge, ...) sowie gegebenenfalls weitere Umweltdaten, wie Wasserstandspegel, Betriebszustände von Geräten oder Anlagen etc. zu erfassen. Den einzelnen Sensoren 4 ist dabei ein eindeutiges Identifikationsdatum zugeordnet, sodass die erfassten Messdaten den Sensoren 4 zugeordnet werden können. Diese Identifikationsdaten der Sensoren 4 sind dabei vorzugsweise werksseitig eindeutig vorgegeben und vom Nutzer nicht veränderbar. Die Sensoren 4 sind entweder direkt an das Datennetzwerk 2 drahtlos oder drahtgebunden angekoppelt, wie in dem Beispiel unten rechts der Figur 1 skizziert ist. Denkbar ist aber auch, dass die Sensoren 4 jeweils drahtgebunden oder vorzugsweise drahtlos mit mindestens einer zugeordneten Basisstationseinheit 5 kommunizieren, die ihrerseits an das Datennetzwerk 2 angekoppelt ist. Die Sensoren 4 sind entweder direkt oder über die zugeordneten Basisstationseinheiten 5 und das Netzwerk 2 mit einem zentralen Server 6 verbunden. Der zentrale Server 6 hat eine Datenverarbeitungseinheit und einen Datenspeicher. Unter einem Server 6 wird nicht notwendiger Weise ein in einem einzigen Gehäuse untergebrachter Computer verstanden. Vielmehr hat ein Server 6 im Sinne der vorliegenden Messdatenerfassungsanordnung 1 unabhängig von der körperlich-räumlichen Ausgestaltung die Funktionalität Messdaten mitsamt dem zugehörigen Identifikationsdatum von den einzelnen Sensoren 4 über das Datennetzwerk 2 zu empfangen und so abzuspeichern, dass über die Auswerteeinheiten 3 und das Datennetzwerk 2 durch eine Abfragenachricht, welche das Identifikationsdatum des abzufragenden Sensors 4 enthält, auf die zugeordneten Messwerte zugegriffen werden kann. Diese im Server 2 abgespeicherten Messwerte werden dann über das Datennetzwerk 2 an die abfragende Abfrageeinheit 3 übermittelt.

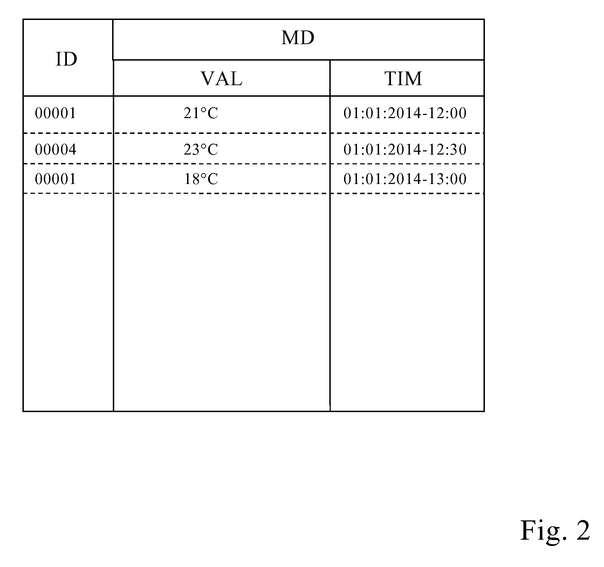

Figur 2 lässt eine Skizze einer von dem Server 6 abgespeicherten Datenbank erkennen. Diese Datenbank enthält eine Vielzahl von Datensätzen, die durch die einzelnen Zeilen der in Figur 2 skizzierten Datenbank repräsentiert werden. Die Datensätze enthalten dabei jeweils ein von einem Sensor 4 erfasstes Messdatum MD, das in dem Datenzusatz zusammen mit dem Identifikationsdatum ID des zugeordneten Sensors 4 abgelegt ist. Das jeweilige Messdatum MD kann mehrere Informationen tragen, wie bspw. einen Messwert VAL und ein zugeordneter Zeitstempel TIM.

Die Datenbank kann entweder ungeordnet sein, wobei beim Anfordern von Messdaten für einen ausgewählten Sensor 4 mittels des Identifikationsdatums ID aus der Datenbank sämtliche in Zusammenhang mit dem Identifikationsdatum abgespeicherten Messdaten MD ausgelesen werden. Gegebenenfalls kann der Server 6 auch noch eine Filterfunktion haben, um die Messdaten mit einem ausgewählten Identifikationsdatum nach weiteren Kriterien zu filtern, wie ausgewählte Zeitbereiche durch Nutzung des Zeitstempels TIM oder ausgewählte Wertebereiche durch Vergleich mit den Messwerten VAL.

Der Server 6 ist dabei vorzugsweise mit geeigneter Programmierung durch ein Datenverarbeitungsprogramm eingerichtet.

Der Server 6 hat vorzugsweise einen Webserver, der den Abfrageeinheiten 3 die erforderliche Abfrage der Software für die Datenbank über herkömmliche Browser bereitstellt.

Denkbar ist aber auch, dass die Abfrageeinheiten 3 eine Applikationssoftware (App) haben. Hier bietet sich an, dass die Abfrageeinheiten 3 Mobiltelefone, Smartphones oder Tablets sind, auf denen eine App geladen wird. Diese Applikation (App) beinhaltet vorzugsweise eine Funktionalität, mit der eine Sensoridentifikation eingelesen werden kann, wie bspw. ein QR-Code-Scanner. Bei der Installation der Sensoren 4 durch einen Nutzer kann der Nutzer dann die Sensoridentifikation, d.h. die Identifikationsdaten erfassen und in der Applikationseinheit 3 abspeichern, um sodann ohne weitere Notwendigkeit einer Eingabe von einem beliebigen Ort aus auf die von dem Sensor 4 erfassten Messdaten MD über den Server 6 zugreifen zu können.

Die Einrichtung und der Betrieb der Messdatenerfassungsanordnung erfolgt somit wie folgt:
a) Die Basisstationseinheiten 5 werden mit einem Netzteil mit Versorgungsspannung verbunden, das LAN-Kabel wird in ein Datennetzwerk 2 eingesteckt und verbindet sich einmal kurz mit dem Server 6. Eine Funktionsanzeige an der Basisstationseinheit 5 zeigt dem Nutzer, dass die Kommunikation zwischen der Basisstationseinheit 5 und dem Server 6 funktioniert (z.B. eine grüne LED). Eine Registrierung der Basisstationseinheit 5 durch den Server 6 erfolgt nicht. Es ist keine Parametrisierung erforderlich, da der Kommunikationsaufbau zwischen Basisstationseinheit 5 und Server 6 werksseitig voreingestellt ist und nutzerunabhängig funktioniert.
b) Die Sensoren 4, die üblicherweise batteriebetrieben sind, werden in Betrieb genommen und senden gemäß ihrer Aufgabe ein von der Basisstationseinheit 5 verständliches Protokoll. Jede Basisstationseinheit 5, die die Aussendung der Sensoren 4 korrekt empfängt (z.B. wenn generelles Datenformat und Checksumme übereinstimmen), überträgt diese Messdaten MD, ohne dass die Basisstationseinheit 5 ihre Bedeutung kennt. Die Übertragung der Messdaten MD an den Server 6 erfolgt z.B. über einen zwischen Basisstationseinheit 5 und Server 6 angeschlossenen Router, ohne dass der Kommunikationsaufbau zwischen Basisstation 5 und Server 6 nutzerabhängig parametrisiert werden muss. Den Basisstationseinheiten 5 sind die Sensoren 4 nicht bekannt. Die Basisstationseinheiten 5 sind eingerichtet, um lediglich deren Messdaten MD und zugeordnete Identifikationsdaten an den Server 6 weiterzuleiten. Befinden sich mehrere Basisstationseinheiten 5 in Reichweite eines Sensors 4, so können die Daten eines Sensors 4 auch mehrfach an den Server 6 über die mehreren Basisstationseinheiten 5 übertragen werden. Damit lässt sich z.B. durch mit Hilfe von Basisstationseinheiten 5 fremder Nutzer oder mit Hilfe eigener weiterer Basisstationseinheiten 5 die Übertragungssicherheit verbessern. Eine nutzerabhängige Einrichtung der Messdatenerfassungsanordnung 1 ist nicht vorgesehen.
c) Jeder Sensor 4 hat ein eindeutiges Identifikationsdatum ID, das vom Server 6 während der Produktion werksseitig vergeben wird. Der Server 6 akzeptiert Daten von jedem Sensor 4 mit einem gültigen Identifikationsdatum ID, egal über welche Basisstationseinheit 5 die Daten angeliefert werden. Die Daten eines Sensors 4 werden auf dem Server 6 für eine vorgegebene Zeit dauerhaft nutzerunabhängig gespeichert.
d) Ein Nutzer mit einer Abfrageeinheit 3, wie bspw. einem Smartphone, lädt eine Applikation z.B. aus einer Applikationsdatenbank. Jeder Sensor 4 hat sein Identifikationsdatum ID auch als QR-Code auf dem Typenschild aufgedruckt. Der Nutzer öffnet die Applikation der Abfrageeinheit 3 und scannt mit der Kamera der Abfrageeinheit 3 das QR-Label. Nach sofortiger Weitergabe des hieraus abgeleiteten Identifikationsdatums ID des zugeordneten Sensors 4 an den Server 6 über die Applikationseinheit 3 und das Datennetzwerk 2 erscheinen innerhalb kurzer Zeit die Messdaten MD des zugehörigen Sensors 4, wie z.B. Temperatur, Feuchte, Luftgüte auf der Anzeige der Abfrageeinheit 3. Die Abfrageeinheit 3 ist nun mit den Daten des Sensors 4, die auf dem Server 6 abgespeichert werden, verbunden, ohne dass eine Anmeldung oder aktive Registrierung notwendig ist.

Ein Sensor 4 bzw. dessen Messdaten MD lassen sich durch wiederholtes Scannen mit beliebig vielen anderen Abfrageeinheiten 3 verbinden. Ebenso kann eine Abfrageeinheit 3 beliebig viele verschiedene Identifikationsdaten unterschiedlicher Sensoren 4 aufnehmen und entsprechend die Daten bei dem Server 6 anfordern und anzeigen.

Nach dem Einscannen des QR-Labels eines Sensors 4 kann das zugehörige Identifikationsdatum ID in der Abfrageeinheit 3 abgespeichert werden, sodass die Abfrage der Messdaten MD des zugehörigen Sensors 4 in Zukunft auch ohne neuerliches Eingeben oder Einscannen des zugehörigen Identifikationsdatums ID des Sensors 4 möglich ist.

Zur Autorisierung des Zugriffs auf die Messdaten MD eines Sensors 4 ist lediglich erforderlich, dass einmal Kenntnis von dem Identifikationsdatum ID erlangt wird.

Mithilfe eines QR-Labels kann ein überaus fälschungssicheres Identifikationsdatum codiert werden, um eine unzulässige Abfrage durch andere Nutzer zu unterbinden. Der gleiche Effekt lässt sich auch erzielen, wenn das Identifikationsdatum ID in einem Transponder des Sensors 4 abgelegt ist. Der Zugriff auf das Identifikationsdatum ID erfordert somit einen Zugang zu dem entsprechenden Sensor 4, der üblicher Weise dem berechtigen Nutzer vorbehalten ist.

## Patentansprüche

1. Verfahren zur Bereitstellung von Messdaten (MD) in einem Datennetzwerk (2) mit einer Anzahl verteilt angeordneter Sensoren (4) einer Mehrzahl unterschiedlicher, voneinander unabhängiger Nutzer, einem Server (6) und mindestens einer Abfrageeinheit (3), wobei die Sensoren (4), der Server (6) und die mindestens eine Abfrageeinheit (3) an das Datennetzwerk (2) angeschlossen sind,
**gekennzeichnet durch**
- Übertragen der Messdaten (MD) der Sensoren (4) jeweils in Verbindung mit einem eindeutigen Identifikationsdatum (ID) des Sensors (4) an den Server (6);
- Abspeichern der übertragenen Messdaten (MD) in Verbindung mit dem zugehörigen Identifikationsdatum (ID) unabhängig von dem zugeordneten Nutzer auf dem Server (6);
- Anfordern von Messdaten (MD) über eine Abfrageeinheit (3) **durch** Übertragen einer das Identifikationsdatum (ID) des abzufragenden Sensors (4) aufweisenden Abfragenachricht von der Abfrageeinheit (3) über das Datennetzwerk (2) an den Server (6); und
- Übertragen der zu dem Identifikationsdatum (ID) auf dem Server (6) abgespeicherten Messdaten (MD) von dem Server (6) an die Abfrageeinheit (3) in Reaktion auf den Empfang der Abfragenachricht der Abfrageeinheit (3) **durch** den Server (6).

2. Verfahren nach Anspruch 1, **dadurch gekennzeichnet, dass** eine Mehrzahl von Sensoren (4) ihre Messdaten (MD) zusammen mit ihrem jeweiligem Identifikationsdatum (ID) an eine jeweils zugeordnete Basisstationseinheit (5) übertragen und diese Basisstationseinheit (5) die empfangenen Messdaten (MD) zusammen mit dem zugehörigen Identifikationsdatum (ID) an den Server (6) übermittelt, wobei der Kommunikationsaufbau mit dem Server (6) in den Basisstationseinheiten (5) werksseitig festgelegt ist und wobei die Anzahl von Sensoren (4) nutzerunabhängig die Sensordaten über einen werksseitig vorgegebenen Kommunikationsaufbau an mindestens eine verfügbare Basisstationseinheit (5) zur Weiterleitung an den Server (6) übertragen.

3. Verfahren nach Anspruch 2, **dadurch gekennzeichnet, dass** die Kommunikationsadresse des Servers (6) im Datennetzwerk (2) festgelegt ist und in den Sensoren (4) oder der Basisstationseinheit (5) diese Kommunikationsadresse des Servers (6) vorgegeben ist.

4. Verfahren nach einem der vorhergehenden Ansprüche **gekennzeichnet durch** Einscannen eines sichtbar an einem abzufragenden Sensor (4) aufgebrachten Identifizierungscodes **durch** eine Abfrageeinheit (3) und übertragen eines aus den eingescannten Identifizierungscode abgeleiteten Identifikationsdatum (ID) des Sensors (4) an den Server (6) zur Anforderung der zu diesem Sensor (4) gehörigen Messdaten (MD) von dem Server (6).

5. Verfahren nach einem der vorhergehenden Ansprüche, **dadurch gekennzeichnet, dass** die Bereitstellung von Messdaten (MD) ohne nutzerspezifische Anmeldung und Einrichtung der Sensoren (4) und der Basisstationseinheit (5) erfolgt.

6. Messdatenerfassungsanordnung (1) mit
- einem Datennetzwerk (2),
- einer Anzahl verteilt angeordneter Sensoren (4) einer Mehrzahl unterschiedlicher, voneinander unabhängiger Nutzer,
- einem Server (6), und
- mindestens einer Abfrageeinheit (3),
wobei die Sensoren (4), der Server (6) und die mindestens eine Abfrageeinheit (3) an das Datennetzwerk (2) anschließbar sind,
**dadurch gekennzeichnet, dass**
- die Sensoren (4) zur Erfassung von Messdaten (MD) und Übertragung an den Server (6) in Verbindung mit einem jeweiligen eindeutigen Identifikationsdatum (ID) des Sensors (4) eingerichtet sind,
- der Server (6) zum Empfang und zur Abspeicherung der Messdaten (MD) in Verbindung mit dem Identifikationsdatum (ID) des zugehörigen Sensors (4) unabhängig von einem Nutzer des Sensors (4) eingerichtet ist, und
- die mindestens eine Abfrageeinheit (3) zum Anfordern von Messdaten (MD) durch Übertragen einer das Identifikationsdatum (ID) des abzufragenden Sensors (4) aufweisenden Abfragenachricht an den Sensor (4) über das Datennetzwerk (2) und zum Empfang der im Server (6) in Verbindung mit dem Identifikationsdatum (ID) abgespeicherten Messdaten (MD) des abgefragten Sensors (4) eingerichtet ist,
wobei der Server (6) zum Übertragen der zu dem Identifikationsdatum (ID) auf dem Server (6) abgespeicherten Messdaten (MD) von dem Server (6) an die Abfrageeinheit (3) in Reaktion auf den Empfang der Abfragenachricht der Abfrageeinheit (3) durch den Server (6) eingerichtet ist.

7. Messdatenerfassungsanordnung (1) nach Anspruch 6, **dadurch gekennzeichnet, dass** die Sensoren (4) von außen zugängliche Identifizierungscodes tragen und dass die mindestens eine Abfrageeinheit (3) zur Erfassung des Identifizierungscodes zur Ermittlung eines Identifikationsdatums (ID) des Sensors (4) aus dem Identifizierungscode und zur Generierung einer das Identifikationsdatum (ID) enthaltenen Abfragenachricht eingerichtet ist.

8. Messdatenerfassungsanordnung (1) nach Anspruch 6 oder 7, **dadurch gekennzeichnet, dass** die Messdatenerfassungsanordnung (1) mindestens eine Basisstationseinheit (5) hat, die an das Datennetzwerk (2) anschließbar und zum Empfang von Messdaten (MD) angeschlossene Sensoren (4) zusammen mit dem zugehörigen Identifikationsdatum (ID) und zur Weiterleitung an den Server (6) eingerichtet ist, wobei der Kommunikationsaufbau mit dem Server (6) über das Datennetzwerk (2) und der Kommunikationsaufbau der Sensoren (4) mit der Basisstationseinheit (5) nutzerunabhängig in der Basisstationseinheit (5) werksseitig festgelegt ist.

9. Messdatenerfassungsanordnung (1) nach Anspruch 8, **dadurch gekennzeichnet, dass** die Sensoren (4) und die mindestens eine Basisstationseinheit (5) jeweils eine drahtlose Datenübertragungseinheit zur Übertragung der Messdaten (MD) und der zugehörigen Identifikationsdaten (ID) von den Sensoren (4) an die Basisstationseinheit (5) haben.
